# EUROPEAN PATENT APPLICATION

(11) **EP 4 576 371 A1**
(43) Date of publication of application: **25.06.2025**
(21) Application number: 23924341.3
(22) Date of filing: 24.11.2023
(51) Int. Cl.: H01M 50/30, H01M 50/367, H01M 50/383, H01M 50/249

(54) **BATTERY MODULE, BATTERY PACK INCLUDING SAME, AND VEHICLE INCLUDING SAME**

(30) Priority: 23.02.2023 KR 20230024614
(71) Applicant: LG Energy Solution, Ltd., Seoul 07335 (KR)
(72) Inventor: PARK, Jeong-Hoon, Daejeon 34122 (KR); CHOI, Wan-Sup, Daejeon 34122 (KR); HAN, Min-Hee, Daejeon 34122 (KR); HAN, Seung-Won, Daejeon 34122 (KR); JUNG, Hye-Mi, Daejeon 34122 (KR)
(74) Representative: Plasseraud IP
(86) International application number: PCT/KR2023/019163
(87) International publication number: WO 2024/177235

(57) **Abstract**

Disclosed are a battery module, a battery pack and a vehicle including the same. A battery module according to an embodiment of the present disclosure includes a battery cell stack in which a plurality of battery cells are stacked; a case in which the battery cell stack is accommodated and a first outlet through which gas is discharged is formed; and an exhaust path member that is coupled to the case to provide an exhaust path for the gas, is provided to allow the gas to be discharged but to prevent the outflow of flame, and has a second outlet formed therein, wherein the exhaust path member is configured such that the gas moves in a straight line direction.

## Description

### TECHNICAL FIELD

The present application claims priority to Korean Patent Application No. 10-2023-0024614 filed on February 23, 2023 in the Republic of Korea, the disclosures of which are incorporated herein by reference.

The present disclosure relates to a battery module, a battery pack and a vehicle including the same, and more specifically, to a battery module that discharges gas but no flame in the event of ignition of the battery cell, a battery pack and a vehicle including the same.

### BACKGROUND ART

As the technology development and demand for mobile devices increase, demand for secondary batteries as an energy source is rapidly increasing, and nickel cadmium batteries or hydrogen ion batteries have been used as conventional secondary batteries, but recently, lithium secondary batteries that have almost no memory effect compared to nickel-based secondary batteries, thereby having advantages such as free charging and discharging, very low self-discharge rate, and high energy density, are widely used.

These lithium secondary batteries mainly use a lithium-based oxide and a carbon material as a positive electrode active material and a negative electrode active material, respectively. Lithium secondary batteries include an electrode assembly in which a positive electrode plate and a negative electrode plate coated with the positive electrode active material and the negative electrode active material, respectively, are disposed with a separator therebetween, and an exterior material that seals and accommodates the electrode assembly together with an electrolyte, that is, a battery case.

Lithium secondary batteries are composed of a positive electrode, a negative electrode, a separator interposed therebetween and an electrolyte, and are classified into a lithium-ion battery (LIB), a polymer lithium-ion battery (PLIB), and the like depending on what positive electrode active material and negative electrode active material are used. Typically, electrodes of these lithium secondary batteries are formed by coating a positive electrode or negative electrode active material on a current collector, such as an aluminum or copper sheet, a mesh, a film, a foil, or the like, and then drying the same.

Lithium secondary batteries are currently in the spotlight due to their advantages such as high operating voltage and significantly high energy density, but because they use an organic electrolyte, overcharging of lithium secondary batteries cause overcurrent and overheating, which in severe cases may lead to a problem of resulting in fire caused by explosion or ignition.

Various types of secondary batteries include a battery module having a case capable of protecting the battery cells and a plurality of battery cells stacked and inserted into the case, and a battery pack including a plurality of battery modules.

Here, in the event of occurrence of a flame in at least one of the battery cells inside the case of the battery module, if the flame flows out to the outside of the case of the battery module, it may not only be propagated to other battery modules, but also create a dangerous situation for the user.

For example, if a flame is generated in the battery cell while a battery module or battery pack is installed in an electric vehicle and the flame leaks to the outside, the driver driving the electric vehicle may be burned or put in a dangerous situation.

Alternatively, if a flame generated from any battery module is propagated to a neighboring battery module, the battery module or battery pack may be damaged, burned out, or exploded by a chain reaction of flames, and thus there is a problem in that the stability of the battery module may not be ensured.

To solve this problem, in the case of a conventional battery module, a zigzag-shaped exhaust path member is mounted, so that the flame is blocked by the exhaust path member, but the gas moves along the exhaust path member.

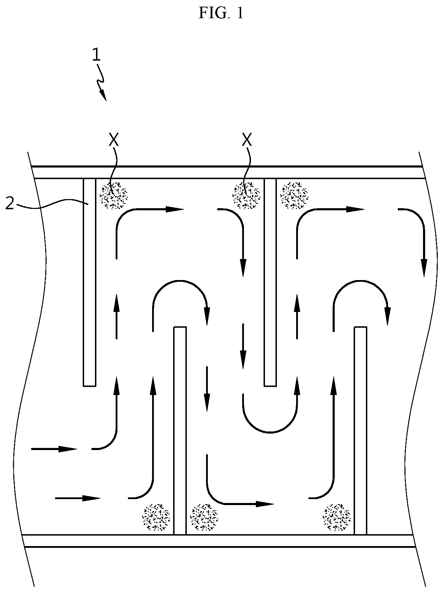

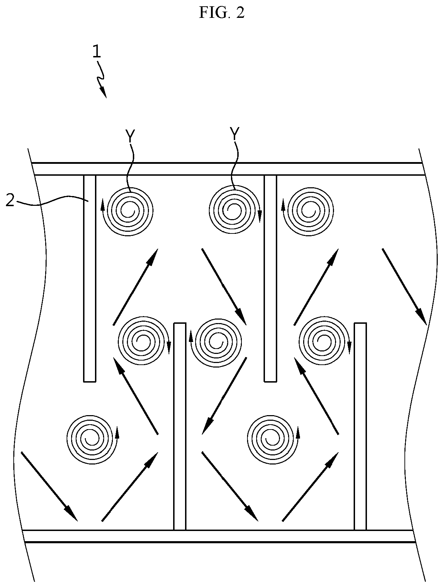

FIGS. 1 and 2 are exemplary views of an exhaust path member of a conventional battery module.

However, when the blocked plate 2 provided on the exhaust path member 1 is disposed in a zigzag shape in a conventional battery module as shown in FIGS. 1 and 2, there is a problem in that a dead space through which gas cannot move exists (see X in FIG. 1), or a vortex is generated (see Y in FIG. 2) to prevent the gas from flowing smoothly.

### DISCLOSURE

### Technical Problem

The present disclosure is designed to solve the problems of the related art, and therefore the present disclosure is directed to providing a battery module that may allow the gas to be discharged to the outside of the case in a preset direction, but no flame to be discharged in the event of occurrence of a flame in the battery cell, and may also allow the gas to flow smoothly when moving, a battery pack and a vehicle including the same.

### Technical Solution

According to one aspect of the present disclosure, there may be provided a battery module including a battery cell stack in which a plurality of battery cells are stacked; a case in which the battery cell stack is accommodated and a first outlet through which gas is discharged is formed; and an exhaust path member that is coupled to the case to provide an exhaust path for the gas, is provided to allow the gas to be discharged but to prevent the outflow of flame, and has a second outlet formed therein, wherein the exhaust path member is configured such that the gas moves in a straight line direction.

In an embodiment, the exhaust path member may include a body coupled to the case and having the second outlet formed therein; and a plurality of partition members formed inside the body and provided to merge moving gases with each other to move in a straight line direction.

In an embodiment, the partition member may include a plurality of unit partitions having inclined portions formed to be inclined from a straight line, and a movement space through which gas can move may be formed between the plurality of unit partitions.

In an embodiment, the plurality of partition members may be arranged in a zigzag shape.

In an embodiment, the unit partition may include a center portion having a straight line shape; a first inclined portion formed to be inclined to a straight line from one end of the center portion; and a second inclined portion formed to be inclined to a straight line from the other end of the center portion.

In an embodiment, the plurality of unit partitions may be all formed in the same size and shape.

In an embodiment, a first unit partition among the plurality of unit partitions and a neighboring second unit partition may be disposed in a direction facing each other.

In an embodiment, a second inclined portion of the first unit partition among the plurality of unit partitions may be provided to be close to a first inclined portion of the neighboring second unit partition.

In an embodiment, the second inclined portion of the first unit partition among the plurality of unit partitions and the first inclined portion of the neighboring second unit partition may be disposed to be spaced apart from each other at a preset interval and parallel to each other.

In an embodiment, a first gas moving through a movement space between the second inclined portion of the first unit partition among the plurality of unit partitions and the first inclined portion of the neighboring second unit partition, and a second gas moving through a movement space between the second inclined portion of the second unit partition among the plurality of unit partitions and the first inclined portion of the neighboring third unit partition may be provided to merge with each other to move in a straight line.

Meanwhile, according to another aspect of the present disclosure, there may be provided a battery pack including a battery module described above, and additionally, there may be provided a vehicle including the battery module.

### Advantageous Effects

According to embodiments of the present disclosure, there is an effect that in the event of occurrence of a flame in the battery cell, it is possible for the gas to be discharged to the outside of the case in a preset direction, but for the flame not to be discharged, and it is also possible for the gas to flow smoothly when moving.

### DESCRIPTION OF DRAWINGS

FIGS. 1 and 2 are exemplary views of an exhaust path member of a conventional battery module.
FIG. 3 is a combined perspective view of a battery module according to an embodiment of the present disclosure.
FIG. 4 is an exploded perspective view of a battery module according to an embodiment of the present disclosure.
FIG. 5 is a view showing the flow of gas in partition members of a battery module according to an embodiment of the present disclosure.
FIG. 6 is an enlarged view of the partition member of FIG. 5.
FIG. 7 is a view showing the flow of gas in FIG. 6.

### BEST MODE

Hereinafter, preferred embodiments of the present disclosure will be described in detail with reference to the accompanying drawings. It should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

In the drawings, the size of each component or a specific portion constituting the component is exaggerated, omitted, or schematically illustrated for convenience and clarity of description. Therefore, the size of each component does not fully reflect the actual size. If it is determined that a detailed description of a related known function or configuration may unnecessarily obscure the gist of the present disclosure, such a description will be omitted.

As used herein, the term 'coupling' or 'connection' refers to not only a case where one member and another member are directly coupled or directly connected, but also a case where one member is indirectly coupled or indirectly connected to another member through a joint member.

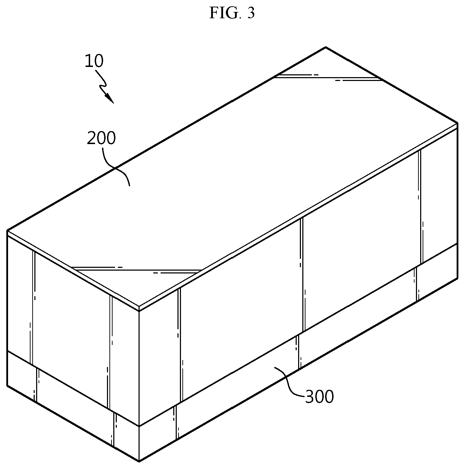

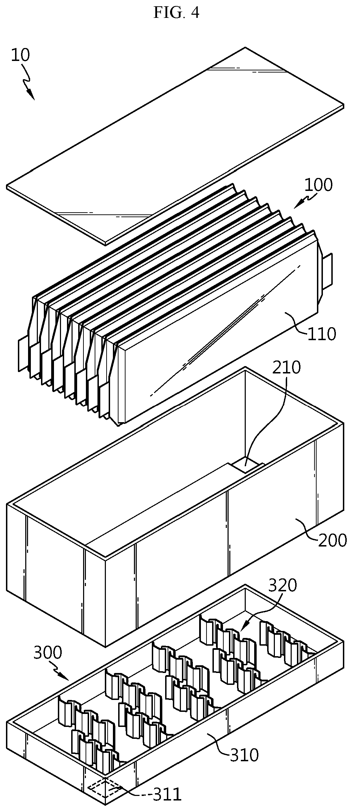

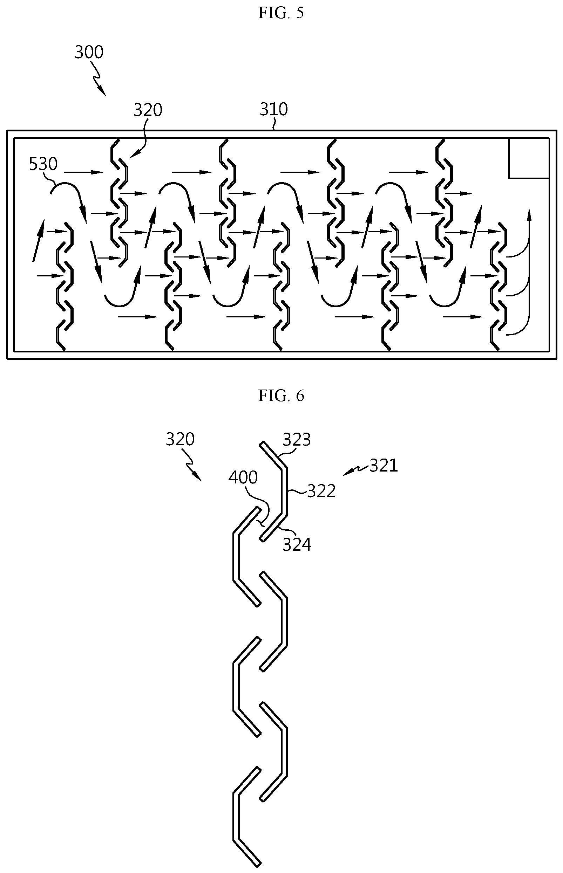

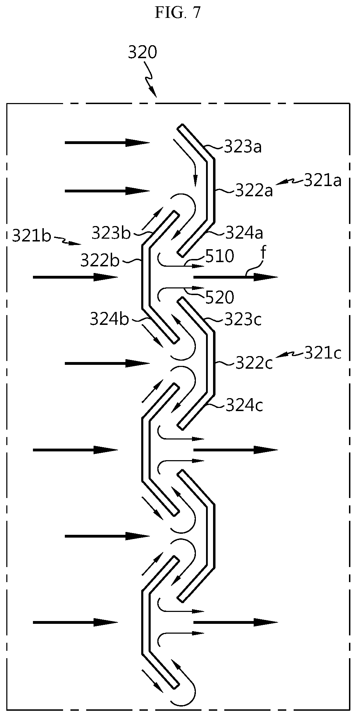

FIG. 3 is a combined perspective view of a battery module according to an embodiment of the present disclosure, FIG. 4 is an exploded perspective view of a battery module according to an embodiment of the present disclosure, FIG. 5 is a view showing the flow of gas in partition members of a battery module according to an embodiment of the present disclosure, FIG. 6 is an enlarged view of the partition member of FIG. 5, and FIG. 7 is a view showing the flow of gas in FIG. 6.

Referring to the drawings, a battery module 10 according to an embodiment of the present disclosure includes a battery cell stack 100, a case 200, and an exhaust path member 300.

Referring to FIGS. 3 and 4, the battery cell stack 100 may be configured such that a plurality of battery cells 110 are stacked. The battery cells 110 may have various structures, and the plurality of battery cells 110 may be stacked in various ways.

The battery cell 110 may have a structure in which a plurality of unit cells arranged in the order of positive electrode plate-separator-negative electrode plate, or a plurality of bi-cells arranged in the order of positive electrode plate-separator-negative electrode plate-separator-positive electrode plate-separator-negative electrode plate are stacked according to the battery capacity.

An electrode lead may be provided in the battery cell 110. The electrode lead is a type of terminal that is exposed to the outside and connected to an external device and may be made of a conductive material. The electrode lead may include a positive electrode lead and a negative electrode lead.

The positive electrode lead and the negative electrode lead may be disposed in opposite directions with respect to the longitudinal direction of the battery cell 110, or the positive electrode lead and the negative electrode lead may be positioned in the same direction with respect to the longitudinal direction of the battery cell 110.

The battery cell stack 100 may be provided with a plurality of cartridges (not shown) accommodating the battery cells 110. Each cartridge (not shown) may be manufactured by injection molding of plastic, and a plurality of cartridges (not shown) in which a receiving portion capable of accommodating the battery cell 110 is formed may be stacked. A cartridge assembly in which a plurality of cartridges (not shown) are stacked may be provided with a connector element or terminal element.

The connector element may include various types of electrical connection parts or connection members for connecting to, for example, a battery management system (BMS, not shown) that may provide data on the voltage or temperature of the battery cell 110.

And, the terminal element is a main terminal connected to the battery cell 110 and includes a positive electrode terminal and a negative electrode terminal. The terminal element may be electrically connected to the outside by having a terminal bolt. Meanwhile, the battery cell 110 may have various shapes.

The battery cell stack 100 is accommodated in the case 200. And, the case 200 surrounds the battery cells 110 and thereby protects the battery cells 110 from external vibration or shock.

A first outlet 210 through which gas is discharged is formed in the case 200. For example, referring to FIG. 4, the first outlet 210 may be formed at a lower side of the case 200, but is not limited thereto.

The gas moving to the exhaust path member 300 through the first outlet 210 of the case 200 moves along the exhaust path member 300 and is discharged through the second outlet 311, but the flame is blocked by the exhaust path member 300 and cannot move.

The case 200 may include a mica plate made of mica having both heat insulation and heat resistance to prevent the outflow of flame. Here, the mica plate may include not only a flat mica plate but also a mixture of flat and curved surfaces.

The case 200 may be formed in a shape corresponding to the shape of the battery cell stack 100. For example, when the battery cell 110 and the battery cell stack 100 are provided in a hexahedral shape with a rectangular cross-section, the case 200 may also be provided in a hexahedral shape to correspond thereto.

The case 200 may be manufactured, for example, by bending a plate made of a metal material, and accordingly, the case 200 may be integrally manufactured. When the case 200 is integrally manufactured, the coupling process is made simple and has the effect of being simplified. Alternatively, the case 200 may be provided in a separate form and may also be coupled by welding or the like. However, the material of the case 200 is not limited to a metal material.

The exhaust path member 300 is coupled to the case 200 to provide an exhaust path for gas, and is configured to discharge the gas but to prevent the outflow of flame. Here, a second outlet 311 is formed in the exhaust path member 300 so that the gas moving to the exhaust path member 300 through the first outlet 210 of the case 200 is discharged to the outside.

For example, referring to FIG. 4, the second outlet 311 may be formed at a position opposite to the first outlet 210, but is not limited thereto.

The exhaust path member 300 is configured to allow gas to move in a straight line direction. Hereinafter, this will be described in detail.

The exhaust path member 300 may be configured to include a body 310 and a partition member 320. The body 310 is coupled to the case 200. And, the second outlet 311 is formed in the body 310. The body 310 may be formed in a shape corresponding to the shape of the case 200, but is not limited thereto.

The partition member 320 is provided in plurality and formed inside the body 310. The plurality of partition members 320 are arranged in various shapes so that moving gases merge with each other to move in a straight line direction.

For example, as shown in FIG. 6, the partition member 320 may be formed by a plurality of unit partitions 321. A detailed description thereof will be provided later. And, the plurality of partition members 320 may be arranged in a zigzag shape as shown in FIG. 5.

Referring to FIG. 7, the partition member 320 may include a plurality of unit partitions 321a, 321b, 321c. Here, the number of the plurality of unit partitions 321a, 321b, 321c may vary.

And, referring to FIG. 6, the unit partition 321 is formed to have inclined portions 323, 324 formed to be inclined from a straight line. For example, any one unit partition 321 may be configured to include a center portion 322, a first inclined portion 323, and a second inclined portion 324.

The center portion 322 may be formed in a straight line shape. And, the first inclined portion 323 may be formed to be inclined to a straight line from one end of the center portion 322. And, the second inclined portion 324 may be formed to be inclined to a straight line from the other end of the center portion 322.

As shown in FIGS. 5 to 7, the plurality of unit partitions 321a, 321b, 321c may be all formed in the same size and shape, but the present disclosure is not limited thereto.

Referring to FIG. 7, the first unit partition 321a among the plurality of unit partitions 321a, 321b, 321c and the neighboring second unit partition 321b may be disposed in a direction facing each other. **In** addition, the second unit partition 321b and the neighboring third unit partition 321c may also be disposed in a direction facing each other.

And, the second inclined portion 324a of the first unit partition 321a among the plurality of unit partitions 321a, 321b, 321c may be configured to be close to the first inclined portion 323b of the neighboring second unit partition 321b.

And, for example, the second inclined portion 324a of the first unit partition 321a among the plurality of unit partitions 321a, 321b, 321c and the first inclined portion 323b of the neighboring second unit partition 321b may be disposed to be spaced apart from each other at a preset interval and parallel to each other.

Accordingly, a movement space 400 (see FIG. 6) through which gas can move may be formed between the plurality of unit partitions 321a, 321b, 321c.

For example, referring to FIG. 7, the first gas 510 moves through the movement space 400 between the second inclined portion 324a of the first unit partition 321a among the plurality of unit partitions 321a, 321b, 321c and the first inclined portion 323b of the neighboring second unit partition 321b.

And, the second gas 520 moves through the movement space 400 between the second inclined portion 324b of the second unit partition 321b among the plurality of unit partitions 321a, 321b, 321c and the first inclined portion 323c of the neighboring third unit partition 321c. Then, the first gas 510 and the second gas 520 merge with each other to move in a straight line (see arrow f in FIG. 7).

In addition, as shown in FIG. 5, the third gas 530 may move in a curved line along the space between the plurality of partition members 320.

That is, the gas moving to the exhaust path member 300 through the first outlet 210 may move in a straight line direction as the first gas 510 and the second gas 520 merge, or may also move in a curved line direction like the third gas 530. The dead space of FIG. 1 and the vortex of FIG. 2 may be removed by this flow of gas, thereby having the effect of allowing the gas to flow smoothly when moving.

Hereinafter, the configuration and operation effects of the battery module 10 according to an embodiment of the present disclosure will be described.

Referring to FIG. 4, the exhaust path member 300 is coupled to the lower part of the case 200. Then, the gas that moves to the exhaust path member 300 through the first outlet 210 of the case 200 continues to move along the exhaust path member 300 and is discharged through the second outlet 311, but the flame is blocked by the exhaust path member 300 and is prevented from moving.

At this time, the exhaust path member 300 is provided with a plurality of unit partitions 321 having inclined portions 323, 324 formed to be inclined from a straight line, and they are disposed to face each other alternately as shown in FIG. 6. And, as shown in FIG. 5, a plurality of partition members 320 including unit partitions 321 are provided, and the plurality of partition members 320 are disposed in a zigzag manner.

And, as shown in FIG. 7, the first gas 510 and the second gas 520 may merge with each other while moving along the unit partition 321 and move in a straight line direction, and as shown in FIG. 5, the third gas 530 may move in a curved line direction. Thereby, it may allow the gas to flow smoothly.

Meanwhile, a battery pack (not shown) according to an embodiment of the present disclosure may include one or more battery modules 10 according to an embodiment of the present disclosure as described above. Also, the battery pack (not shown) may further include, in addition to the battery module 10, a housing for accommodating the battery module 10 and various devices for controlling the charging and discharging of the battery module 10, such as a BMS, a current sensor, a fuse, and the like.

Meanwhile, a vehicle (not shown) according to an embodiment of the present disclosure may include a battery module 10 or a battery pack (not shown) described above, and the battery pack (not shown) may include the battery module 10. And, the battery module 10 according to an embodiment of the present disclosure may be applied to the vehicle (not shown), for example, a predetermined vehicle (not shown) designed to use electricity, such as an electric vehicle or a hybrid vehicle.

The present disclosure has been hereinabove described with regard to a limited number of embodiments and drawings, but the present disclosure is not limited thereto and it is obvious to those skilled in the art that a variety of modifications and changes may be made thereto within the technical aspects of the present disclosure and the equivalent scope of the appended claims.

### INDUSTRIAL APPLICABILITY

The present disclosure relates to a battery module, a battery pack and a vehicle including the same, and is particularly applicable to industries related to secondary batteries.

## Claims

1. A battery module, comprising:
a battery cell stack in which a plurality of battery cells are stacked;
a case in which the battery cell stack is accommodated and a first outlet through which gas is discharged is formed; and
an exhaust path member that is coupled to the case to provide an exhaust path for the gas, is provided to allow the gas to be discharged but to prevent the outflow of flame, and has a second outlet formed therein,
wherein the exhaust path member is configured such that the gas moves in a straight line direction.

2. The battery module according to claim 1,
wherein the exhaust path member comprises:
a body coupled to the case and having the second outlet formed therein; and
a plurality of partition members formed inside the body and provided to merge moving gases with each other to move in a straight line direction.

3. The battery module according to claim 2,
wherein the partition member comprises a plurality of unit partitions having inclined portions formed to be inclined from a straight line, and
a movement space through which gas can move is formed between the plurality of unit partitions.

4. The battery module according to claim 3,
wherein the plurality of partition members are arranged in a zigzag shape.

5. The battery module according to claim 3,
wherein the unit partition comprises:
a center portion having a straight line shape;
a first inclined portion formed to be inclined to a straight line from one end of the center portion; and
a second inclined portion formed to be inclined to a straight line from the other end of the center portion.

6. The battery module according to claim 5,
wherein the plurality of unit partitions are all formed in the same size and shape.

7. The battery module according to claim 6,
wherein a first unit partition among the plurality of unit partitions and a neighboring second unit partition are disposed in a direction facing each other.

8. The battery module according to claim 7,
wherein a second inclined portion of the first unit partition among the plurality of unit partitions is provided to be close to a first inclined portion of the neighboring second unit partition.

9. The battery module according to claim 8,
wherein the second inclined portion of the first unit partition among the plurality of unit partitions and the first inclined portion of the neighboring second unit partition are disposed to be spaced apart from each other at a preset interval and parallel to each other.

10. The battery module according to claim 9,
wherein a first gas moving through a movement space between the second inclined portion of the first unit partition among the plurality of unit partitions and the first inclined portion of the neighboring second unit partition, and a second gas moving through a movement space between the second inclined portion of the second unit partition among the plurality of unit partitions and the first inclined portion of the neighboring third unit partition are provided to merge with each other to move in a straight line.

11. A battery pack comprising a battery module according to any one of claims 1 to 10.

12. A vehicle comprising a battery module according to any one of claims 1 to 10.
